# EUROPEAN PATENT SPECIFICATION

(11) **EP 1 890 799 B1**
(45) Date of publication and mention of the grant of the patent: **25.11.2009**
(21) Application number: 06763369.3
(22) Date of filing: 30.05.2006
(51) Int. Cl.: B01J 3/06

(54) **METHOD FOR GROWING SYNTHETIC DIAMONDS**
VERFAHREN ZUR HERSTELLUNG VON SYNTHETISCHEN DIAMANTEN
PROCEDE DE CROISSANCE DE DIAMANTS DE SYNTHESE

(30) Priority: 31.05.2005 EP 05104699
(43) Date of publication of application: 27.02.2008
(73) Proprietor: MMI Trust Holding S.A., 2163 Luxembourg (LU)
(72) Inventor: REGER, Vladislav, 54290 Trier (DE); SMIDT, Franc, L-2560 Luxembourg (LU); POPKOV, Alexander, L-2560 Luxembourg (LU)
(74) Representative: Office Freylinger
(86) International application number: PCT/EP2006/062718
(87) International publication number: WO 2006/128866

(56) References cited:
- US-A- 4 301 134
- US-A- 5 360 477

## Description

The present invention relates to a method for growing synthetic diamonds, in particular to a high-pressure high-temperature process for the synthesis of large high-quality monocrystalline diamonds.

Monocrystalline diamonds can be classified according to colour and chemical purity. The majority of monocrystalline diamonds are coloured, as they contain nitrogen as an impurity, and are thereby used primarily for industrial purposes; these would be classified as type Ia and Ib. High-quality gem diamonds, which contain very little or no nitrogen impurities, are colourless or possess various light colours and would be classified as type IIa. Types Ia, Ib and IIa are electrical insulators. A rare form of monocrystalline diamond (classified as type IIb) contains boron as an impurity, is blue in colour and is a semiconductor. In nature, these characteristics are uncontrolled and therefore the colour, impurity level and electrical characteristics are unpredictable and cannot be utilized to produce large volumes of specialized articles in a predictable manner.

Besides colour and electrical properties, diamonds possess a wide range of extreme characteristics, which make them interesting for industrial applications, including hardness, coefficient of thermal expansion, chemical inertness and wear resistance, low friction, and high thermal conductivity.

There is an increasing need for large (more than 1 carat) monocrystalline diamonds in science, industry and for use as gemstones. Because of the relative scarcity of natural single-crystals of diamond, there has been a long running quest for routes to synthesize monocrystalline diamond on industrial scale.

Synthetic diamonds were first produced successfully by General Electric in the 1950ies, by subjecting graphite to pressures as high as 7 GPa and temperatures ranging from 1200 to 1700°C, in presence of a metal catalyst (see e.g. US 2,947,608, US 2,947,609 and US 2,947,610). Today, most synthetic diamonds are produced in a chemical vapour deposition (CVD) process. Diamond produced by either the high-pressure high-temperature (HPHT) method or the CVD method can nowadays be produced as monocrystalline diamond. Synthetic diamonds of types Ia, Ib, IIa, semiconductor diamonds and dislocation-free diamonds have been demonstrated.

In the attempt to improve the production of diamonds by the HPHT method, numerous measures have been employed including the adequate choice of catalyst and carbonaceous material. It was e.g. suggested to use channel black pre-processed at 1200°C, amorphous or fine-grained carbon with grain sizes of about 30 microns or monocrystalline caustobilliths. Considerable achievements have also been done in the field of high-pressure equipment.

Despite these efforts, it is currently deemed difficult and expensive to produce large high quality monocrystalline diamond by the high-pressure high-temperature method.

### Object of the invention

The object of the present invention is to provide an improved high-pressure high-temperature process for growing synthetic diamonds. This is achieved by a method as claimed in claim 1.

### General description of the invention

A method for growing synthetic diamonds generally comprises subjecting carbonaceous material to a high-pressure and high-temperature (HPHT) treatment. Pressure and temperature are chosen such that diamond is the thermodynamically preferred form of carbon, i.e. the pressure ranges from 5 to 10 GPa and the temperature from 1200 to 2000°C. According to an important aspect of the invention, the used carbonaceous material comprises polycrystalline nanodiamond particles having sizes of less than 100 nm. Preferably, the polycrystalline nanodiamond particles are of detonation origin ("detonation nanodiamond particles"). Detonation nanodiamonds are formed from carbon contained in the molecules of explosives in the detonation of the latter. As detonation nanodiamonds can be produced in bulk quantities, they constitute an interesting material for industrial applications. The surface structure of detonation nanodiamond particles differs from monocrystalline nanodiamond particles obtained by static synthesis.

The nanodiamond particles are polycrystalline, i.e. each particle contains several nano-sized single-crystal diamonds (crystallites) attached one to another in random fashion. Advantageously, the polycrystalline nanodiamond particles are generally round, with the contained crystallites, i.e. the coherently scattering domains, having typical sizes of 1 nm. The density of the nanodiamond particles preferably ranges from 3.2 to 3.25 g/cm³, with a carbon content representing 99.8% of the particle mass. Detonation diamonds exist in different degrees of purity, it will however be appreciated if they contain not more than 0.15% in mass of impurities that cannot be solved in a mineral acid having a boiling point of at least 460 K (at atmospheric pressure), preferably chloric acid, an acid of alkali composition or nitric acid at pressures above 60 atmospheres.

Using nano-sized diamond particles in the carbonaceous feedstock results in an increased density with regard to sole graphite, which is commonly used for diamond synthesis. A given reaction volume can therefore hold more carbon atoms if they are present in the form of nanodiamond particles than if they are present as graphite. Consequently, larger diamonds (4 carats and more) can be grown with the same reaction volume. Moreover, the total surface of the nanodiamond-particles is substantially higher than in a corresponding amount of graphite. Consequently, the surface energy density is substantially increased. High-quality single-crystal diamonds having a weight of several carats (1 carat = 200 mg) can be grown.

According to an advantageous embodiment of the invention, the carbonaceous material further comprises fullerenes, e.g. C60, C70, C90, C120 or a mixture thereof. Adding fullerenes allows increasing the growth rate of the synthetic diamonds. The small size of fullerenes compared with the polycrystalline nanodiamond particles results in a further increase of the carbon content of the reaction volume, the total surface of the carbonaceous mixture and its surface energy density. In the carbonaceous mixture, the ratio of polycrystalline nanodiamond particles to fullerenes can be chosen freely, but preferably, the ratio ranges from 5/95 to 75/25, and more preferably from 10/90 to 50/50.

Prior to the HPHT treatment, the carbonaceous material can be cleaned under vacuum conditions. Preferably, atomic hydrogen is used to remove impurities from the carbonaceous material, such as nitrogen and/or oxygen. Additionally, the cleaning can comprise a purifying treatment of the carbonaceous material with an acid, preferably a strong mineral acid, e.g. chloric acid. Such an acid reacts with carbonates contained in the carbonaceous material, which could cause flaws in the synthesised diamond. The cleaning may be achieved at a predetermined temperature in the range of 600 K to 1000 K, more preferably between 600 K and 890 K. As will be appreciated, the cleaning with atomic hydrogen and acid can be conducted simultaneously.

In addition to polycrystalline nanodiamond particles or nanodiamond particles with fullerenes, the carbonaceous material advantageously comprises graphite.

The ratio of graphite to the other components is not critical, nevertheless it is favourable with regard to the growth rate if the amount of graphite is smaller than the amount of the other carbonaceous components.

The addition of graphite to the carbonaceous material is beneficial when forming the carbonaceous material to a block after the cleaning process and before the HPHT treatment. The graphite acts as a binding agent, which keeps the block in shape.

To compact the block and to further remove impurities, the block is submitted to a shock wave treatment. In a preferred form, the shock wave treatment comprises exposing the tablet to a first shock wave front of not less than 15 GPa peak pressure followed after at least 10 microseconds by cylindrical shock waves of not less than 12 GPa peak pressure.

In order to give the synthetic diamonds specific optical and/or electrical properties, certain atomic species can be added. For example, controlled addition of nitrogen can result in refined yellow diamonds, while boron confers diamonds a blue colour and the electrical properties of a semiconductor. Naturally, addition of other species may result in other interesting properties.

### Detailed description of a preferred mode of execution

Preferred modes of execution of the method for growing synthetic diamonds shall now be discussed in detail.

In a first way to carry out the invention, a mixture of highly pure graphite and polydisperse polycrystalline detonation nanodiamond powder is used as feedstock for the process. Detonation nanodiamonds are synthesised from carbon contained in the molecules of an explosive mixture by detonation of the latter. In the present case, the detonation nanodiamonds are used without removing the soot obtained in the explosion. The average size of the substantially round or oval nanodiamond particles is less than 100 nm in diameter. Each polycrystalline nanodiamond particle comprises a plurality of sub-nanometre diamond crystallites. The content of carbon of the nanodiamond particles represents at least 99.8% of their mass and their density ranges from 3.20 to 3.25 g/cm³. The content of impurities, which cannot be solved in chloric acid, amounts to less than 0.15% of the overall mass.

The used nanodiamond particles are substantially smaller in size than the graphite particles, the size of which ranges from about 1 micron for very fine graphite to a few hundreds of microns for coarser graphite. The density of the nanodiamond particles is substantially higher than the density of graphite (around 2.15 g/cm³), which reduces the necessary volume of carbonaceous material with regard to a process that uses only graphite. On the other hand, when the volume stays the same, larger diamonds can be grown. Additionally, the surface density of the nanodiamond particles is substantially higher (about 1.8 times) than the surface density of graphite. As a result, the surface energy density is substantially increased with respect to pure graphite.

The carbonaceous mixture is subsequently subjected during a few hours (preferably at least two hours) to a purification treatment with atomic hydrogen under vacuum conditions. The temperature shall be kept in a range from 600 K to 1000 K, preferably between 600 K and 890 K. Simultaneously, the carbonaceous mixture is put under the influence of acid. During cleaning, the amount of nitrogen, oxygen and carbonates present in the carbonaceous mixture is reduced.

The cleaned carbonaceous material is pressed to a tablet or block together with a powder catalyst for diamond synthesis and a single-crystal seed diamond. The size of the block or tablet and its density limits the weight of the diamonds that can be grown.

Prior to the actual HPHT treatment, the block is exposed to shock waves to further remove impurities, to compact the block and to activate the process of crystallisation. Preferably, the shock wave treatment commences with an isolated flat shock wave front with a peak pressure of at least 15 GPa, followed within a short delay of not less than 10 µs) by cylindrical shock waves having peak pressures of at least 12 GPa.

The block is then placed into a thermo-gradient reaction container and subjected to high pressures and high temperatures. The temperature is increased step-wise from ambient temperature to at least 1200°C and maximally 2000°C. Crystal growth is performed at pressures from 5 to 10 GPa, preferably below 8 GPa. The growth time varies depending on the desired size of the synthetic diamonds. Nevertheless, growth times are considerably shorter (a few days for large diamonds) than with traditional HPHT methods (up to several months).

After diamond synthesis, the obtained crystals undergo another treatment with atomic hydrogen in vacuum and at elevated temperature (600 - 1000 K, preferably 600 - 890 K) during at least two hours.

In another embodiment of the method, the mixture of carbonaceous material comprises fullerenes, e.g. C₆₀, C₇₀, C₉₀, C₁₂₀ in addition to nanodiamond particles and graphite. The mass ratio of nanodiamond particles to fullerenes can take any value in the range from 5/95 to 75/25, preferably from 10/90 to 50/50. A mixture composed of approximately 40% nanodiamond particles, 40% fullerenes and 20% graphite proved to be well suited for the synthesis of diamonds of outstanding quality. The addition of fullerenes to the mixture raises the packing density of the involved particles. At the same time, the density of superficial energy increases. By adding fullerenes, the growth rate of synthetic diamonds can increase by up to 25%, while the quality of the stones remains constant or improves.

## Claims

1. A method of growing synthetic diamonds comprising the steps of:
providing carbonaceous material;
subjecting said carbonaceous material to a high-pressure and high-temperature treatment, wherein pressure is selected in the range from 5 to 10 GPa and wherein temperature is selected in the range from 1200 to 2000°C;
**characterised in that**
said carbonaceous material comprises polycrystalline nanodiamond particles having sizes of less than 100 nm.

2. Method according to claim 1, wherein said polycrystalline nanodiamond particles are of detonation origin.

3. Method according to any one of claims 1 to 2, wherein said polycrystalline nanodiamond particles have a density of 3.2 to 3.25 g/cm³,
consist to at least 99.8% of carbon;
have a generally round form and comprise crystallites of a size of less than 1 nm.

4. Method according to any one of claims 1 to 3, wherein said carbonaceous material further comprises fullerenes.

5. Method according to claim 4, wherein a ratio of said polycrystalline nanodiamond particles to said fullerenes ranges from 10/90 to 50/50.

6. Method according to any one of claims 1 to 5, comprising the step of cleaning said carbonaceous material under vacuum conditions prior to said high-pressure high-temperature treatment.

7. Method according to claim 6, wherein said cleaning comprises a purifying treatment with atomic hydrogen.

8. Method according to claim 6 or 7, wherein said cleaning comprises a purifying treatment of said carbonaceous material with an acid.

9. Method according to any one of claims 6 to 8, wherein said cleaning is achieved at a predetermined temperature in the range of 600 K to 1000 K.

10. Method according to any one of claims 1 to 9, wherein said carbonaceous material further comprises graphite.

11. Method according to claim 10, comprising the step of forming said carbonaceous material to a block prior to said high-pressure high-temperature treatment.

12. Method according to 11, comprising the step of subjecting said block to a shock wave treatment.

13. Method according to claim 12, wherein said shock wave treatment comprises exposing said block to a first shock wave front of not less than 15 GPa peak pressure followed after at least 10 microseconds by cylindrical shock waves of not less than 12 GPa peak pressure.

14. Method according to any one of claims 1 to 13, comprising the step of adding a specific species to said carbonaceous material so as to modify optical and/or electrical properties of said synthetic diamonds.

## Patentansprüche

1. Verfahren zur Züchtung synthetischer Diamanten, umfassend folgende Schritte:
Bereitstellen von kohlenstoffhaltigem Material;
Aussetzen des kohlenstoffhaltigen Materials einer Hochdruck- und Hochtemperatur-Behandlung, wobei der Druck im Bereich von 5 bis 10 GPa ausgewählt ist und wobei die Temperatur im Bereich von 1200 bis 2000°C ausgewählt ist;
**dadurch gekennzeichnet, dass**
das kohlenstoffhaltige Material polykristalline Nanodiamantpartikel mit Größen unter 100 nm umfasst

2. Verfahren nach Anspruch 1, wobei die polykristallinen Nanodiamantpartikel aus einer Detonation stammen

3. Verfahren nach irgendeinem der Ansprüche 1 bis 2, wobei die polykristallinen Nanodiamantpartikel eine Dichte von 3,2 bis 3,25 g/cm³ aufweisen, zu mindestens 99,8% aus Kohlenstoff bestehen;
eine generell runde Form aufweisen und Kristalliten mit einer Größe unter 1 nm umfassen

4. Verfahren nach irgendeinem der Ansprüche 1 bis 3, wobei das kohlenstoffhaltige Material ferner Fullerene umfasst

5. Verfahren nach Anspruch 4, wobei ein Verhältnis zwischen den polykristallinen Nanodiamantpartikeln und den Fullerenen von 10/90 bis 50/50 reicht.

6. Verfahren nach irgendeinem der Ansprüche 1 bis 5, umfassend den Schritt zum Reinigen des kohlenstoffhaltigen Materials unter Vakuumbedingungen vor der Hochdruck-Hochtemperatur-Behandlung

7. Verfahren nach Anspruch 6, wobei das Reinigen eine Reinigungsbehandlung mit atomarem Wasserstoff umfasst

8. Verfahren nach Anspruch 6 oder 7, wobei das Reinigen eine Reinigungsbehandlung des kohlenstoffhaltigen Materials mit einer Säure umfasst

9. Verfahren nach irgendeinem der Ansprüche 6 bis 8, wobei das Reinigen bei einer vorbestimmten Temperatur im Bereich von 600 K bis 1000 K erreicht wird

10. Verfahren nach irgendeinem der Ansprüche 1 bis 9, wobei das kohlenstoffhaltige Material ferner Graphit umfasst

11. Verfahren nach Anspruch 10, umfassend den Schritt zum Formen des kohlenstoffhaltigen Materials zu einem Block vor der Hochdruck-Hochtemperatur-Behandlung

12. Verfahren nach Anspruch 11, umfassend den Schritt zum Aussetzen des Blocks einer Stoßwellenbehandlung.

13. Verfahren nach Anspruch 12, wobei die Stoßwellenbehandlung das Aussetzen des Blocks einer ersten Stoßwellenfront mit nicht unter 15 GPa Spitzendruck und anschließend nach mindestens 10 Mikrosekunden zylindrischen Stoßwellen mit nicht unter 12 GPa Spitzendruck umfasst

14. Verfahren nach irgendeinem der Ansprüche 1 bis 13, umfassend den Schritt zum Hinzufügen einer spezifischen Spezies zu dem kohlenstoffhaltigen Material, so dass die optischen und/oder elektrischen Eigenschaften der synthetischen Diamanten modifiziert werden.

## Revendications

1. Procédé de culture de diamants synthétiques comprenant les étapes de : fourniture d'un matériau carboné ;
soumission dudit matériau carboné à un traitement à haute pression et haute température, dans lequel la pression est choisie dans la plage allant de 5 à 10 GPa et dans lequel la température est choisie dans la plage allant de 1 200 à 2 000°C ;
**caractérisé en ce que**
ledit matériau carboné comprend des nanoparticules polycristallines de diamant ayant des tailles inférieures à 100 nm.

2. Procédé selon la revendication 1, dans lequel lesdites nanoparticules polycristallines de diamant proviennent de détonation

3. Procédé selon l'une quelconque des revendications 1 à 2, dans lequel lesdites nanoparticules polycristallines de diamant ont une densité de 3,2 à 3,25 g/cm³,
consistent en au moins 99,8 % de carbone ;
ont une forme généralement ronde et comprennent des cristallites d'une taille inférieure à 1 nm

4. Procédé selon l'une quelconque des revendications 1 à 3, dans lequel ledit matériau carboné comprend en outre des fullerènes.

5. Procédé selon la revendication 4, dans lequel un rapport desdites nanoparticules polycristallines de diamant auxdits fullerènes s'étend de 10/90 à 50/50.

6. Procédé selon l'une quelconque des revendications 1 à 5, comprenant l'étape de nettoyage dudit matériau carboné sous des conditions sous vide avant ledit traitement à haute pression et haute température

7. . Procédé selon la revendication 6, dans lequel ledit nettoyage comprend un traitement de purification avec de l'hydrogène atomique

8. Procédé selon la revendication 6 ou 7, dans lequel ledit nettoyage comprend un traitement de purification dudit matériau carboné avec un acide

9. Procédé selon l'une quelconque des revendications 6 à 8, dans lequel ledit nettoyage est atteint à une température prédéterminée située dans la plage de 600 K à 1 000 K

10. Procédé selon l'une quelconque des revendications 1 à 9, dans lequel ledit matériau carboné comprend en outre du graphite

11. . Procédé selon la revendication 10, comprenant l'étape de mise en forme dudit matériau carboné en un bloc avant ledit traitement à haute pression et haute température

12. Procédé selon la revendication 11, comprenant l'étape de soumission dudit bloc à un traitement par ondes de choc

13. Procédé selon la revendication 12, dans lequel ledit traitement par ondes de choc comprend l'exposition dudit bloc à un premier front d'ondes de choc présentant une pression pic non inférieure à 15 Gpa, suivi après au moins 10 microsecondes d'ondes de choc cylindriques présentant une pression pic non inférieure à 12 GPa

14. Procédé selon l'une quelconque des revendications 1 à 13, comprenant l'étape d'addition d'une espèce spécifique dudit matériau carboné afin de modifier les propriétés optiques et/ou électriques desdits diamants synthétiques
